# EUROPEAN PATENT SPECIFICATION

(11) **EP 1 023 647 B1**
(45) Date of publication and mention of the grant of the patent: **13.04.2005**
(21) Application number: 98953507.5
(22) Date of filing: 14.10.1998
(51) Int. Cl.: G05B 13/02, H04R 25/00

(54) **A NEUROFUZZY BASED DEVICE FOR PROGRAMMABLE HEARING AIDS**
NEUROFUZZY-VORRICHTUNG FÜR PROGRAMMIERBARE HÖRHILFEN
DISPOSITIF "NEUROFLOU" POUR PROTHESE AUDITIVE PROGRAMMABLE

(30) Priority: 15.10.1997 US 62354 P
(43) Date of publication of application: 02.08.2000
(73) Proprietor: BELTONE ELECTRONICS CORPORATION, Chicago Illinois 60646 (US)
(72) Inventor: BASSEAS, Stavros, Photios, Park Ridge, IL 60068 (US)
(74) Representative: Fenlon, Christine Lesley
(86) International application number: PCT/US1998/021701
(87) International publication number: WO 1999/019779

(56) References cited:
- EP-A- 0 712 261
- US-A- 4 972 487
- US-A- 5 606 620
- M.LEISENBERG: "HEARING AIDS FOR THE PROFOUNDLY DEAF BASED ON NEURAL NET SPEECH PROCESSING" PROCEEDINGS OF THE 1995 INTERNATIONAL CONFERENCE ON ACOUSTICS SPEECH AND SIGNAL PROCESSING, vol. 5, 9 May 1995 (1995-05-09), pages 3535-3538, XP000937950 USA

## Description

### Field of the Invention:

The present invention is directed towards fitting a programmable hearing aid by providing electroacoustic targets based on hearing impairments, on the learned information from previous successful fittings and on user comments/responses while listening to different sound environments and those targets are to be matched by the response of the hearing aid.

### Background of the Invention:

Programmable hearing aids offer the possibility of making choices for the values of multiple parameters, hence allowing for a very wide range of electroacoustic responses capable of accommodating many different kinds of hearing impairments. The audiologist/hearing aid practitioner using audiometric measurements decides on the objectives/targets that the hearing device should match in order to compensate for the impairment.

With the advent of programmable hearing instruments, it has become possible to achieve near optimal matching between the electroacoustic responses and the targets. The targets are derived from prescriptive procedures, based on theoretical or empirical considerations, originally proposed for linear nonprogrammable hearing devices. Lately, new prescriptive formulas intended for nonlinear programmable devices such as DSLi/o and Fig. 6 are being used. Nevertheless, their targets are based on artificial listening environments (i.e., speech weighted noise) and do not adequately characterize hearing aid performance in realistic environments.

The audiologist is then often faced with user complaints that reflect the performance of the device in everyday environments and he/she then must adjust the operating parameters of the device with suboptimal tools and methods. Setting those parameters one at a time (e.g., AGC for the low channel, Gain for the high channel) is a suboptimal procedure because there is a great degree of interdependence between the parameters. Furthermore, the user responses and complaints are imprecise and uncertain and they need to be deciphered by the audiologist.

Finally, even tools that allow for an automatic mechanism for deciphering the user responses, such as the fuzzy logic device described in US Patent 5,606,620, are not optimal because they directly control the individual parameters of the device. Because of this direct control, many contradictory demands on setting the parameters are not adequately resolved by the inherent capabilities of the fuzzy logic. Furthermore, the said system does not provide for an efficient mechanism for incorporating learning from successful fittings other than the manual entry of fuzzy rules.

EP-A-0712261 discloses a hearing aid which incorporates a neural network for processing received audio signals to produce processed output signals. 'Hearing Aids for the Profoundly Deaf based on Neural Net Speech Processing' (Procedures of the 1995 International Conference on Acoustics Speech and Signal Processing, vol. 5, 9 May 1995, pp 3535-3538) discloses the use of neural net-type processing of speech for cochlear implants.

US-A-4972487 discloses a hearing aid with a data logging capability to keep track of the use of a plurality of user selected settings of a hearing aid.

However, none of these prior art documents allows user responses to sound stimuli, as perceived by the user of the hearing aid, to be fed back to the fitting system and processed by fuzzy logic-type processing to produce a modified set of targets which are in turn used to optimise some or all of the operational parameters of the hearing aid.

### Summary of the Invention:

According to a first aspect of the present invention, there is provided a device for programming a hearing aid to fit a hearing impaired user, the device including: means for entering audiological and other relevant data that characterize aspects of the user and of his/her hearing impairment; neural network means for generating initial targets addressing at least one aspect of the user's hearing impairment in at least one environment in which the hearing aid may be used; characterized by means for generating sound stimuli for in situ evaluation of the performance of the hearing aid as experienced by the hearing impaired user; means for receiving responses from the user to sound stimuli generated during the evaluation; fuzzy logic means incorporating rule generating commands for modifying the initial targets into modified targets, the modifying being dependent on the user responses; data processing means for using the modified targets to optimize at least some operational parameters of the hearing aid as a group; means for downloading the operational parameters to the hearing aid; and means for entering fuzzy processing rules to the fuzzy logic means.

According to a second aspect of the present invention, there is provided a method of programming a hearing aid for a hearing impaired user, the method including: entering audiological and other relevant data; and generating an initial set of targets addressing at least one aspect of the user's hearing impairment in at least one environment in which the hearing aid may be used; characterized by generating sound stimuli for in situ evaluation of the performance of the hearing aid as experienced by the hearing impaired user; receiving responses from the user to sound stimuli generated during the evaluation; modifying the initial targets, with fuzzy logic-type processing, into modified targets in response to the user responses; using the modified targets to optimize at least some operational parameters of the hearing aid as a group; and downloading the operational parameters to the hearing aid.

Thus, an embodiment of the invention provides for a neurofuzzy device that as a first step in the fitting process, generates initial targets for compensating a particular hearing loss. These targets are based both on collected individualized audiometric and other data and on the accumulated learning from previous successful fittings. Starting the fitting process with efficient initial targets could significantly shorten the process.

Targets could have the form of gain curves for different input levels, signal to noise curves, etc. These curves are not directly dependent on the particular hearing device used, rather they represent the electroacoustic response of an "ideal" prosthesis for the particular impairment.

The targets are generated by a multilayer neural network which is a "black box" information processing system trained to generate an optimum match between a set of audiometric measurements such as the auditory thresholds and the corresponding best frequency and gain curves at different input levels for each subject. The neural network requires a priori knowledge and acquiring it requires large amounts of data in order to converge to a solution.

The required a priori knowledge is entered into the network during an off line training session performed during manufacturing using data collected from hearing aid dispensing outlets from selected geographical areas. The currently available prescriptive rationales such as NAL and Fig. 6 are based on such data and are used in fitting traditional non programmable hearing aids as well as starting frequency/gain target curves for programmable devices.

The known rationales are fairly limited in scope as it is not possible to develop formulas based on observations of large fitting data that will adequately reflect the interdependencies in the data. A neural network can far more effectively capture the essential nonlinearities of the problem. The captured knowledge is in the form of nodal weights in the hidden layers of the network.

Training the network is also an ongoing process which is enabled after the fine tuning process that culminated in a successful fitting. The modified targets, resulting from the fuzzy logic based fine tuning process described later on, are used for retraining the neural network. Such on-line training allows for the neurofuzzy fitting device to be biased toward the peculiarities of a particular clientele.

The fine-tuning process in this neurofuzzy methodology closes the loop of the fitting process. After the initial targets are generated, the settings of all the parameters of the hearing prosthesis are derived and transmitted to the hearing aid. The user is then asked to listen to different sound stimuli (e.g.., speech at different levels, speech and noise at different signal to noise ratio etc.) and rate the performance of the hearing aid using qualities of sound perception such as loudness, tonality, comfort, distortion, clarity etc. The fuzzy interface modifies the targets taking as inputs the user response as well as certain objective characteristics of the sound stimuli (e.g.., overall sound pressure level and signal to noise Ratio) and using preentered rules.

The preentered fuzzy rules could be provided by the manufacturer or locally by the audiologist. The new modified targets are used for the derivation of a new set of values, for all the parameters, which in turn are downloaded to the hearing aid. A new battery of tests is completed and the circle is repeated until satisfactory results are achieved.

The hearing aid parameters are a function of both the sound characteristics of the input to the hearing aid and the target curves (which, at the limit, are identical to the electroacoustic response of the hearing aid). This relationship can be encoded in a neural network by pretraining it using the targets and the sound characteristics as inputs and the corresponding parameters as outputs. At the end of the fitting process, and depending on the measure of satisfaction, the audiologist/hearing aid professional can use the final targets for the automatic retraining of the neural network that generates the initial targets.

Numerous other advantages and features of the present invention will become readily apparent from the following detailed description of the invention and the embodiments thereof, from the claims and from the accompanying drawings.

### Brief Description of the Drawings:

Fig. 1 is a block diagram of the device that implements the neurofuzzy methodology and the interaction points (data entry blocks) with the hearing impaired user and the audiologist;
Fig. 2 is a diagram of a section of the neural network that generates gain target values for certain frequencies based on the hearing thresholds; and
Fig. 3 is a "flow chart" representation of the fuzzy logic system that modifies the targets originally generated by the neural network. The fuzzy logic is part of the interactive fine tuning procedure of the hearing device.

### Detailed Description of the Preferred Embodiments:

While this invention is susceptible of embodiment in many different forms, there are shown in the drawing and will be described herein in detail specific embodiments thereof with the understanding that the present disclosure is to be considered as an exemplification of the principles of the invention and is not intended to limit the invention to the specific embodiments illustrated.

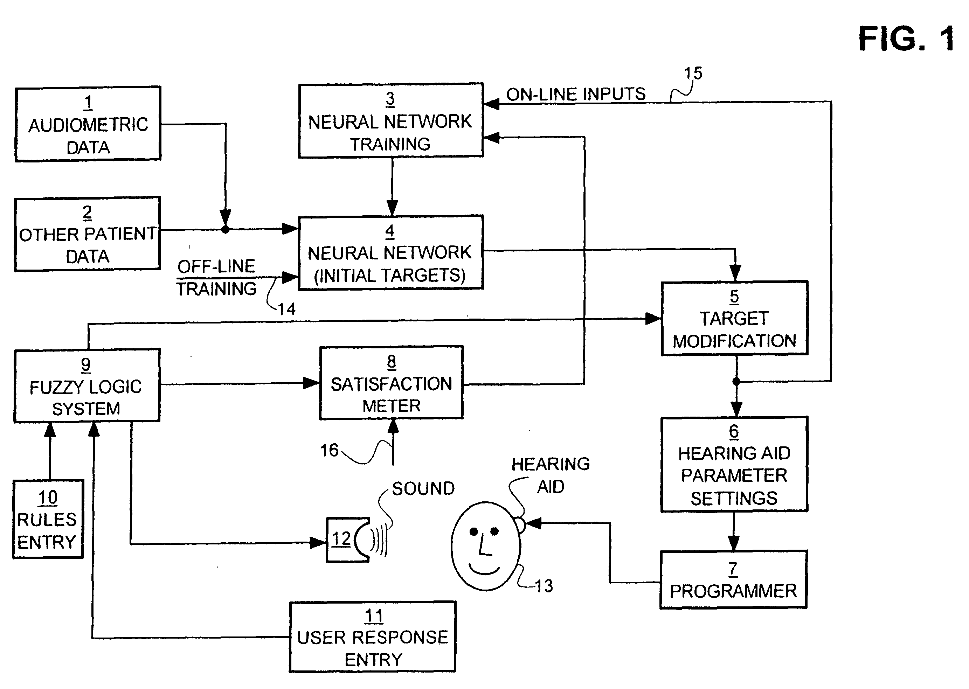

The device shown in Fig. 1 is a block diagram representation of the neurofuzzy system of the present invention used in optimizing the performance of a programmable hearing aid. This methodology can be realized on a personal computer with computer peripherals such the keyboard, the touch screen and the ports used as data entry and monitoring points and the sound card and the CD-ROM used for generating the sound signals used in the fine tuning process.

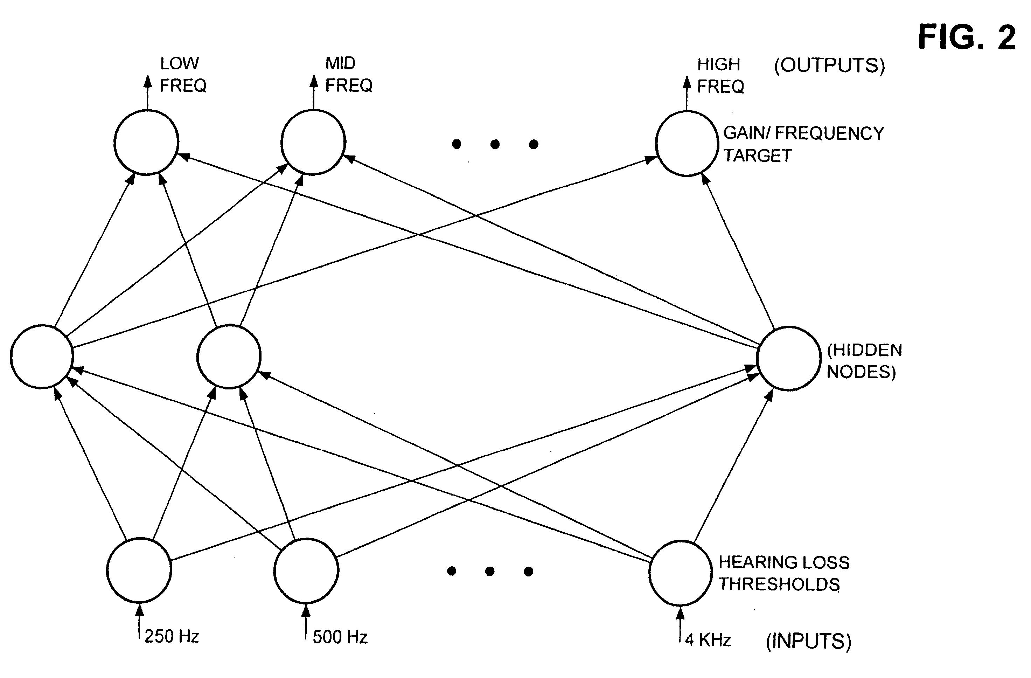

The blocks in Fig. 1 are separate subroutines in a software package provided to the audiologist by the hearing aid manufacturer. The audiometric data 1 is entered into the system via the computer keyboard and it includes, among others 2, audiometric threshold data at different frequencies. The above data is entered into a pretrained neural network 4 and a portion of this network is shown in Fig. 2.

The network generates the necessary target values that the hearing aid needs to match the given input level in order to compensate for the impairment of that particular user. Fig. 2 gives an example of target values for three different frequency regions. Each of these values is a function of the user audiometric data (only thresholds are shown here for simplicity) and the information embedded in the hidden neural layers. This information is put there during the training session 3 of the neural network. Such training procedure is well known to those familiar with the field.

The training of the neural net 3 is done off line 14 before the device (software package) is sent for use to the audiologist. In the present configuration, retraining of the neural net is possible after a successful fitting.

When the level of satisfaction 8 of the performance of the hearing device is high enough, then retraining can take place by updating the embedded information in the hidden neurons of the neural net and using the set of modified targets 15 derived after a successful fine tuning process. Before retraining, the hidden neurons will produce an initial set of target curves based on the audiometric data 1 and other patient data 2.

After retraining, the future target curves will be closer to the ones resulting from the past successful fine tuning processes. Subsequently, for a user with similar audiometric data, the system will produce initial targets closer to the needs of this particular impairment, thus shortening the fine-tuning process.

Every time a new set of targets is generated 5, the parameters of the hearing aid must be changed in order for its electroacoustic response to match the targets. Generating the appropriate parameters 6 could take the form of pattern matching searches or, if computation time is a constrain, implementation with a pretrained neural network.

Once the parameters are generated they are sent to the hearing aid 13 via the programmer unit 7. The programmed hearing aid 13 is worn by the user and he/she is asked to evaluate its performance while listening to specific speech/sound stimuli 12. The user then quantitatively rates it in terms of certain sound qualities such as loudness, tonality, comfort, clarity, etc.

The user enters his/her responses 11 by entering a number on a scale via, for example, a touch screen monitor. An example of how these responses could be interpreted are described next. If the stimuli sounds loud to him/her, then a high number ( 3) is entered on the membership graph for loudness scale shown in Fig. 2.

The value of 3 on the x axis of said graph means that the sound level perceived by the user has a membership degree of 1 in the loud category and a membership degree of 0 in the soft and normal categories, as shown in the y axis of said graph. The membership degree numbers are the inputs to the fuzzy logic system 9.

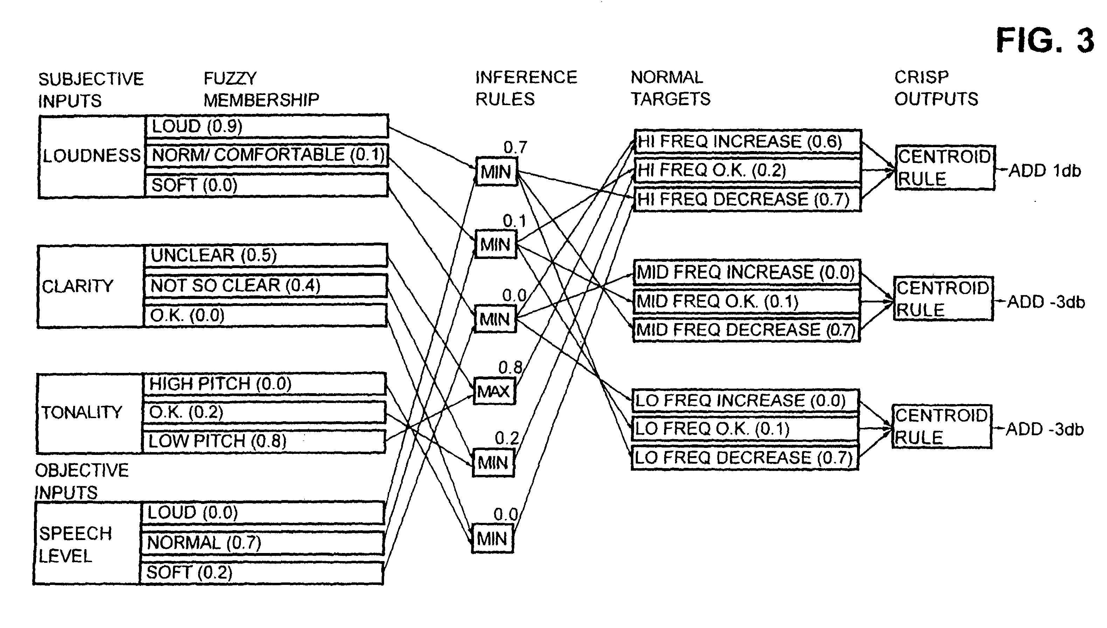

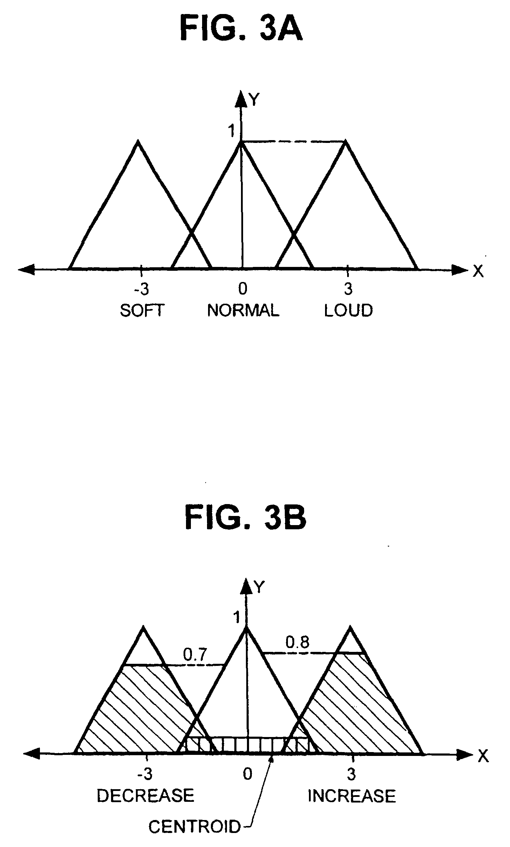

In Fig. 2, a flow chart for purposes of enabling one of skill to understand and practice the invention, is shown of the fuzzy logic and its operation. The membership degrees in the objective input category termed speech-level in Fig 3, indicate that the level of the input signal to the hearing aid is very close in value to what a normal hearing user calls comfortable (membership degree 0.7). That same signal is characterized as "loud" by the hearing aid user as indicated by the subjective input termed "loudness" (membership degree 0.9, in loud category). This same signal is characterized as "low pitch" (membership degree 0.8) in the tonality scale and "almost unclear" (membership degree 0.5) in the clarity scale.

Given the above evaluation, it is obvious that the hearing aid in this example is not performing well in restoring loudness and clarity to normal levels.

Certain adjustments to the initial targets are necessary. The necessary adjustments are described in the following examples of rules that the fuzzy logic system must implement.
1. If low pitch or unclear, then increase high frequencies.
2. If loudness is loud, and input is normal, then decrease low, mid, and high frequencies.
3. If high pitch and clear, then decrease high frequencies.
4. If loudness is normal and input is normal, then high, mid, and low frequencies are O.K.
5. If pitch is O.K. and clarity is O.K., then high frequency O.K.
6. If loudness is soft and input is normal, then increase high, mid, and low frequencies.

The implementation of the above examples of rules is illustrated in Fig. 2. The outcome of the implementation of the rules will be an increase, decrease or no change in the gain for the frequency/gain curve termed normal-target, corresponding to the target electroacoustic response of the hearing aid for normal level input sounds. The target curve is divided into low, mid, and high frequency sections for simplicity purposes. The gain of each of these sections can be increased, decreased, or remain unchanged, depending on the membership degree value assigned to it by the above inference rules.

Rule #1 assigns the minimum of two membership degree values (that of the loud category in the loudness scale, and the comfortable category in the speech level scale) to the increase-high-frequency category of the normal-target-high-frequency scale. The resulting membership degree is 0.8. The same procedure is followed with the rest of the rules.

If more than one membership degree is assigned to each category, the one with the maximum value is selected. After implementing all the rules, and based on the membership degree of the three frequency scales, it is clear that the gain in low and mid frequencies should be decreased and the gain for the high frequency should remain almost unchanged. The amount of necessary change in gain is derived by a rule such as the center-of-gravity rule shown in the membership graph for the high-frequency target.

The shaded area under each category (increase, O.K., decrease) gives a visual representation of the membership degree. The center of gravity of the shaded area is closer to 3 than to -3 in the x axis (close to 1). The centroid is a representative crisp value which indicates how many decibels of gain must be added to the high frequency target. Thus, Fig. 3 indicates a crisp value of 3dB should be subtracted from the mid and low frequency gain of the target curve.

When a battery of different listening tests and evaluations is completed using the new modified targets, the fine tuning procedure will continue until the audiologist decides that a satisfactory level of performance is reached. The satisfaction meter 8 can be based on the weighted accumulated changes of the target curves. Once a converging value is reached, this could be indication of having reached a point of diminishing returns in the fine tuning process.

Although modifications and changes may be suggested by those skilled in the art, it is the intention of the inventor to embody within the patent warranted hereon all changes and modifications as reasonably and properly come within the scope of his contribution for the generation and the adjustments to the initial targets as are necessary.

## Claims

1. A device for programming a hearing aid (13) to fit a hearing impaired user, the device including:
means for entering audiological (1) and other relevant (2) data that characterize aspects of the user and of his/her hearing impairment; and
neural network means (4) for generating initial targets addressing at least one aspect of the user's hearing impairment in at least one environment in which the hearing aid may be used;
**characterized by**
means (12) for generating different sound stimuli for in situ evaluation of the performance of the hearing aid as experienced by the hearing impaired user;
means (11) for receiving responses from the user to sound stimuli generated during the evaluation;
fuzzy logic means (9) incorporating rule generating commands for modifying (5) the initial targets into modified targets, the modifying being dependent on the user responses (11);
data processing means for using the modified targets to optimize all operational parameters of the hearing aid as a group;
means (7) for downloading the operational parameters to the hearing aid; and
means (10) for entering fuzzy processing rules to the fuzzy logic means (9).

2. A device according to claim 1, further comprising means (15) for on-line retraining (3) of the neural network means (4) upon conclusion of satisfactory programming of the hearing aid, and/or means (14) for off-line retraining of the neural network means (4) from off site collected data of satisfactorily programmed hearing aids.

3. A device as in claim 1 wherein the data processing means includes a processor and a plurality of instructions wherein the neural network means (4) is implemented by the processor's execution of the plurality of instructions.

4. A device as in claim 3 wherein the processor is coupled to the means for entering audiological (1) and other relevant data (2).

5. A device as in claim 3, which includes instructions for responding to user responses (11) and for implementing the processing of the fuzzy logic means (9).

6. A device as in claim 1 wherein the neural network means (4) incorporates a plurality of interconnected node elements wherein some of the elements are associated with one layer and others of the elements are associated with a different layer.

7. A device as in claim 6 wherein at least some of the nodes are implemented by pluralities of instructions executed by at least one processor.

8. A method of programming a hearing aid (13) for a hearing impaired user, the method including:
entering audiological (1) and other relevant (2) data; and
generating by neural network means (4) an initial set of targets addressing at least one aspect of the user's hearing impairment in at least one environment in which the hearing aid may be used;
**characterized by**
generating sound stimuli for in situ evaluation of the performance of the hearing aid as experienced by the hearing impaired user;
receiving responses from the user to sound stimuli generated during the evaluation;
modifying the initial targets, with fuzzy logic-type processing, into modified targets in response to the user responses;
using the modified targets to optimize all operational parameters of the hearing aid as a group; and
downloading the operational parameters to the hearing aid.

9. A method as in claim 8 further **characterized by** entering fuzzy processing rules.

10. A method as in claim 8 further **characterized by**
generating additional sound stimuli for further in situ evaluation of the performance of the hearing aid;
modifying the current targets with fuzzy logic-type processing in response thereto and generating a responsive set of optimized parameters; and
downloading the responsive set of optimized parameters to the hearing aid.

## Patentansprüche

1. Vorrichtung zum Programmiernen einer Hörhilfe (13), so dass sie hörgeschädigten Benutzern anpassbar ist, wobei die Vorrichtung folgendes aufweist:
Mittel zum Eingeben audiologischer (1) und anderer relevanter (2) Daten, welche Apsekte des Benutzers und seiner/ihrer Hörschädigung kennzeichnen; und
neurale Netzwerkmittel (4) zum Erzeugen anfänglicher Vorgaben, welche auf zumindest einen Aspekt der Hörschädigung des Benutzers in zumindest einer Umgebung, in der die Hörhilfe verwendet werden kann, gerichtet ist;
**gekennzeichnet durch**:
Mittel (12) zum Erzeugen verschiedener Klangstimuli für die In-Situ-Evaluierung der Leistung der Hörhilfe, wie sie **durch** den hörgeschädigten Benutzer erfahren wird;
Mittel (11) zum Empfangen von Antworten des Benutzers auf Klangstimuli, die während der Evaluierung erzeugt werden;
Fuzzy-Logikmittel (9), welche regelerzeugende Kommandos zum Modifizeren (5) der anfänglichen Vorgaben in modifizierte Vorgaben beinhalten, wobei das Modifizieren von den Antworten (11) des Benutzer abhängt;
Datenverarbeitungsmittel zum Verwenden der modifizierten Vorgaben, um alle Betriebsparameter der Hörhilfe als Gruppe zu optimieren;
Mittel (7) zum Herunterladen der Betriebsparameter auf die Hörhilfe; und
Mittel (10) zum Eingeben von Fuzzy-Ablaufregeln in die Fuzzy-Logikmittel (9).

2. Vorrichtung nach Anspruch 1, weiter aufweisend Mittel (15) für das Neuausrichten (3) der neuronalen Netzwerkmittel (4) online nach Abschluss der zufriedenstellenden Programmierung der Hörhilfe und/oder Mittel (14) zum Neuausrichten der neuronalen Netzwerkmittel (4) offline aus den vorrichtungsfern gesammelten Daten der zufriedenstellend programmierten Hörhilfe.

3. Vorrichtung nach Anspruch 1, wobei das Datenverarbeitungsmittel einen Prozessor und eine Anzahl an Anweisungen aufweist, wobei das neuronale Netzwerkmittel (4) durch die Ausführung der Anzahl an Anweisungen durch den Prozessor implementiert ist.

4. Vorrichtung nach Anspruch 3, wobei der Prozessor an das Mittel zum Eingeben audiologischer (1) oder anderer relevanter Daten (2) gekoppelt ist.

5. Vorrichtung nach Anspruch 3, aufweisend Anweisungen zum Antworten auf Benutzerantworten (11) und zum Implementieren der Durchführung des Fuzzy-Logikmittels (9).

6. Vorrichtung nach Anspruch 1, wobei das neuronale Netzwerkmittel (4) eine Anzahl miteinander verbundener Knotenelemente aufweist, wobei einige der Elemente einer Schicht und andere der Elemente der anderen Schicht zugeordnet sind.

7. Vorrichtung nach Anspruch 6, wobei zumindest einige der Knoten durch mehrere Anweisungen implementiert sind, die von mindestens einem Prozessor ausgeführt werden.

8. Verfahren zum Programmiernen einer Hörhilfe (13) für einen högeschädigten Benutzer, wobei das Verfahren folgendes aufweist:
Eingeben audiologischer (1) und anderer relevanter (2) Daten; und
Erzeugen eines ursprünglichen Satzes an Vorgaben durch neuronale Netzwerkmittel (4), welche Vorgaben auf zumindest einen Aspekt der Hörschädigung des Benutzers in mindestens einer Umgebung, in der die Hörhilfe eingesetzt werden kann, gerichtet ist;
**gekennzeichnet durch**:
Erzeugen von Klangstimuli für die In-Situ-Evaluierung der Leistung der Hörhilfe, wie sie **durch** den hörgeschädigten Benutzer erfahren wird;
Empfangen von Antworten vom Benutzer auf Geräuschstimuli, welche während der Evaluierung erzeugt werden;
Modifizeren der ursprünglichen Vorgaben **durch** fuzzylogikartige Verarbeitung in modifizierte Vorgaben als Antwort auf die Benutzerantworten;
Verwenden der modifizierten Vorgaben, um alle Betriebsparameter der Hörhilfe als Gruppe zu optimieren; und
Herunterladen der Betriebsparameter auf die Hörhilfe.

9. Verfahren nach Anspruch 8, **gekennzeichnet durch** das Eingeben von Fuzzy-Verarbeitungsregeln.

10. Verfahren nach Anspruch 8, **gekennzeichnet durch**:
Erzeugen zusätzlicher Klangstimuli für die weitere In-Situ-Evaluierung der Leistung der Hörhilfe;
Modifizieren der gegenwärtigen Vorgaben mit fuzzylogikartiger Verarbeitung als Antwort darauf und Erzeugen eines Antwortsatzes an optimierten Parametern; und
Herunterladen des Antwortsatzes optimierter Parameter auf die Hörhilfe.

## Revendications

1. Un dispositif pour programmer une prothèse auditive (13) adaptée à un utilisateur malentendant, le dispositif comprenant :
un moyen pour entrer des données audiométriques (1) et d'autres données appropriées (2) qui caractérisent des aspects de l'utilisateur et de sa déficience auditive ; et
un réseau neuronal (4) pour générer des cibles initiales concernant au moins un aspect de la déficience auditive de l'utilisateur dans au moins un environnement dans lequel la prothèse auditive peut être utilisée ;
**caractérisé par**
un moyen (12) pour générer différent stimulis sonores pour une évaluation in situ de la performance de la prothèse auditive telle quelle est vécue par l'utilisateur malentendant ;
un moyen (11) pour recevoir des réponses de l'utilisateur au stimuli sonore généré pendant l'évaluation ;
un moyen de logique floue (9) incorporant une règle générant des commandes pour modifier (5) les cibles initiales en cibles modifiées, la modification étant dépendante des réponses (11) de l'utilisateur ;
un moyen de traitement de données pour utiliser les cibles modifiées pour optimiser tout les paramètres opérationnels de la prothèse auditive comme un groupe ;
un moyen (7) pour télécharger les paramètres opérationnels dans la prothèse auditive ; et
un moyen (10) pour entrer des règles de traitement flou dans le moyen de logique floue (9)

2. Un dispositif selon la revendication 1, comprenant en outre un moyen (15) pour l'apprentissage (3) en ligne du réseau neuronal (4) sur la conclusion d'une programmation satisfaisante de la prothèse auditive, et/ou un moyen (14) pour l'apprentissage hors ligne du réseau neuronal (4) à partir de données collectées hors site de prothèses auditives programmées de manière satisfaisante.

3. Un dispositif selon la revendication 1, dans lequel le moyen de traitement de données comprend un processeur et une pluralité d'instructions, dans lequel le réseau neuronal (4) est implémenté par l'exécution de la pluralité d'instructions par le processeur.

4. Un dispositif selon la revendication 3, dans lequel le processeur est couplé au moyen pour entrer des données audiométriques (1) et d'autres données appropriées (2).

5. Un dispositif selon la revendication 3, qui comprend des instructions pour répondre aux réponses de l'utilisateur (11) et pour implémenter le traitement du moyen de logique floue (9).

6. Un dispositif selon la revendication 1, dans lequel le réseau neuronal (4) incorpore une pluralité d'éléments de noeuds interconnectés dans lequel certains des éléments sont associés avec une couche et d'autres éléments sont associés avec une couche différente.

7. Un dispositif selon la revendication 6, dans lequel au moins certains des noeuds sont implémentés par des pluralités d'instructions exécutées par au moins un processeur.

8. Une méthode de programmation d'une prothèse auditive (13) pour un utilisateur malentendant, la méthode comprenant les étapes suivantes :
on entre des données audiométriques (1) et d'autres données appropriées (2) ; et
on génère au moyen du réseau neuronal (4) un ensemble initial de cibles concernant au moins un aspect de la déficience auditive de l'utilisateur dans au moins un environnement dans lequel la prothèse auditive peut être utilisée
**caractérisé en ce que**
on génère un stimuli sonore pour une évaluation in situ de la performance de la prothèse auditive telle que vécue par l'utilisateur malentendant ;
on reçoit des réponses de l'utilisateur au stimuli sonore généré pendant l'évaluation ;
on modifie les cibles initiales, avec un traitement de type logique floue, en cibles modifiées en réponse aux réponses de l'utilisateur ;
on utilise les cibles modifiées pour optimiser tous les paramètres opérationnels de la prothèse auditive comme un groupe ; et
on télécharge les paramètres opérationnels dans la prothèse auditive.

9. Une méthode selon la revendication 8, **caractérisée en outre en ce qu'**on entre des règles de traitement flou.

10. Une méthode selon la revendication 8, **caractérisée en outre en ce que**
on génère un stimuli sonore additionnel pour une évaluation in situ supplémentaire de la performance de la prothèse auditive ;
on modifie les cibles courantes avec le traitement de type logique floue en réponse et on génère un ensemble approprié de paramètres optimisés ; et
on télécharge l'ensemble approprié de paramètres optimisés dans la prothèse auditive.
